# EUROPÄISCHE PATENTANMELDUNG

(11) **EP 4 606 472 A2**
(43) Veröffentlichungstag der Anmeldung: **27.08.2025**
(21) Anmeldenummer: 25000065.0
(22) Anmeldetag: 25.01.2019
(51) Int. Cl.: B01J 20/283

(54) **VERFAHREN ZUR BESTIMMUNG VON VERUNREINIGUNGEN IN POLYALKYLENAMINEN UND DESSEN VERWENDUNG**

(30) Priorität: 27.01.2018 DE 102018000650
(62) Teilanmeldung aus: 19703942.3
(71) Anmelder: Friedrich-Schiller-Universität Jena, 07743 Jena (DE)
(72) Erfinder: Schubert, Ulrich Sigmar, 07743 Jena (DE); Nischang, Ivo, 07743 Jena (DE); Brunzel, Michaela, 07743 Jena (DE)
(74) Vertreter: Ackermann, Joachim

(57) **Zusammenfassung**

Beschrieben wird ein Verfahren zur Bestimmung von Verunreinigungen in Polyalkylenaminen umfassend die Schritte:
- Einbringen von Polyalkylenaminen als Analyt in eine Chromatographiesäule, die monolithisches Kieselgel als stationäre Phase enthält,
- Eluieren des Analyten mit einem flüssigen Elutionsmittel, das eine solche Polarität aufweist, dass der Analyt während der Chromatographie in adsorptivem Gleichgewicht mit der stationären Phase steht,
- Detektion der Komponenten des Analyten am austrittsseitigen Ende der Chromatographiesäule unter Erhalt eines Chromatogramms, welches unterschiedliche Komponenten des Analyten und deren qualitative Menge in Abhängigkeit von der Retentionszeit der einzelnen Komponenten ausweist, und
- Ermittlung von Banden im Chromatogramm, die eine geringe Höhe oder Fläche im Vergleich zur Bande mit der größten Höhe oder Fläche aufweisen, als Indiz für die Anwesenheit von Verunreinigungen im Analyten.

Mit dem Verfahren lassen sich auf einfache Art und Weise Verunreinigungen in der Probe ermitteln. Das Verfahren kann zur Qualitätskontrolle aber auch zur präparativen Reinigung der Probe eingesetzt werden.

## Beschreibung

Die Erfindung betrifft die Bestimmung von Verunreinigungen in in aliphatischen Polyalkylenaminen, insbesondere die Bestimmung von H-initiierten Verunreinigungen bei der Synthese von Polyoxazolinen.

Polyalkylenamine werden unter anderem als Härtungsmittel für Epoxidharze, zur Herstellung von Polyamiden und als kationische Flockungsmittel verwendet. Polyalkylenamine können durch Umsetzung mit Phosgen an den primären Aminogruppen in die entsprechenden Polyisocyanate überführt werden, die beispielsweise für die Herstellung von Polyurethanen eingesetzt werden können. Polyalkylenamine, wie Polyoxazoline, enthalten häufig H-initiierte Spezies, welche durch den Synthese-weg bestimmt werden. Diese Verunreinigungen sind bei manchen Anwendungen unerwünscht.

Polyoxazoline sind potentiell als Ersatzstoffe bzw. als Ergänzungsstoffe für Polyethylenglykolmonomethylether (mPEG) von Interesse. Es besteht also auch hier der Bedarf an einer einfachen Möglichkeit der Identifizierung und der Entfernung von unerwünschten Bestandteilen.

Zur analytischen Bestimmung von Verunreinigungen und zur präparativen Aufarbeitung von Polyalkylenaminen bieten sich grundsätzlich chromatographische Verfahren an.

Zur Auftrennung oder Reinigung von Polymeren mittels chromatographischer Verfahren stehen unterschiedliche chromatographische Verfahren zur Verfügung. Dazu zählen insbesondere die Größenausschlusschromatographie (SEC), die Chromatographie unter kritischen Bedingungen (LCCC) und die Flüssig-Adsorptionschromatographie (LAC).

LCCC als Elutionsmodus kann eine Elution anbieten, die von der Kettenlänge des Makromoleküls unabhängig ist, d.h. die nur von der Endgruppe bestimmt wird.

Bisherige Bestimmungen von Verunreinigungen in Polyalkylenaminen lassen in mancherlei Hinsicht noch zu wünschen übrig. Solche Bestimmungen umfassen beispielsweise die analytische Erfassung von Verunreinigungen mittels SEC verbunden mit einer geeigneten Detektionsmethode. Diese Analysemethode kann gegebenenfalls mit anderen analytischen Methoden gekoppelt werden, beispielweise mit Magnetresonanzspektroskopie oder mit Massenspektrometrie.

Monolithische Formkörper haben sich als stationäre Phase bei der Aufreinigung und Trennung von Biopolymeren bewährt. EP 1 629 887 A1, WO 2006/013043 A1, DE 198 01 575 A1 und DE 197 26 151 A1 beschreiben solche Verfahren.

Die Herstellung von monolithischen oder partikulären Sorbenzien mit einheitlicher Porengröße wird in DE 102 58 491 A1 beschrieben.

DE 197 26 164 A1 offenbart ummantelte monolithische Sorbenzien.

In der WO 2005/075976 A2 wird ein Trennverfahren beschrieben, bei dem ein kapillares Trennverfahren mit Massenspektrometrie gekoppelt wurde. Das Verfahren wird vorzugsweise unter Einsatz eines monolithischen Sorbens durchgeführt.

Es wurde jetzt ein chromatographisches Verfahren gefunden, das hervorragend zur Bestimmung von Polyol- und Polyaminverunreinigungen in Polyalkylenaminen geeignet ist. Mit dem erfindungsgemäßen Verfahren lassen sich Polyol- oder Polyaminverunreinigungen kommerzieller Produkte problemlos bestimmen. Die Methode lässt sich auch an Polyalkylenaminen durchführen, deren Endgruppen ganz oder teilweise funktionalisiert worden sind, oder die funktionalisierte Polyol- oder Polyamin-verunreinigungen enthalten, beispielsweise veretherte Hydroxyendgruppen oder alkylierte Aminoendgruppen. Die erfindungsgemäße Methode gestattet auch quantitative Bestimmungen von sehr geringen Mengen an Polyol- oder Polyamin-verunreinigungen, beispielsweise von Mengen von kleiner als 1 Gew. % davon.

Mit dem erfindungsgemäßen Verfahren lassen sich die Menge an Verunreinigungen in Polyalkylenaminen quantitativ bestimmen. Dabei können die Verunreinigungen, die eine geringere Molmasse oder eine größere Molmasse wie das gewünschte Produkt aufweisen, bestimmt und/oder abgetrennt werden. Verunreinigungen, welche die gleiche Molmasse wie das gewünschte Produkt aufweisen können ebenfalls bestimmt und/oder abgetrennt werden, sofern die Molmasse nicht zu große Werte annimmt, beispielsweise Werte von mehr als 20000 g/mol.

Innerhalb gewisser Dispersitätsgrenzen, welche Vorrausetzung für die Anwendbarkeit der Polymere ist, ist eine Identifikation und quantitative Bestimmung der Verunreinigungen möglich. Die Identität der Verunreinigungen, beispielsweise des Diols, kann durch MALDI-MS Messungen untermauert werden.

Die Erfindung betrifft ein Verfahren zur Bestimmung von Verunreinigungen in Polyalkylenaminen umfassend die Schritte
i) Einbringen von Polyalkylenaminen als Analyt in eine Chromatographiesäule, die monolithisches Kieselgel als stationäre Phase enthält,
ii) Eluieren des Analyten mit einem flüssigen Elutionsmittel, das eine solche Polarität aufweist, dass der Analyt während der Chromatographie in adsorptivem Gleichgewicht mit der stationären Phase steht,
iii) Detektion der Komponenten des Analyten am austrittsseitigen Ende der Chromatographiesäule unter Erhalt eines Chromatogramms, welches unterschiedliche Komponenten des Analyten und deren qualitative Menge in Abhängigkeit von der Elutionszeit der einzelnen Komponenten ausweist, und
iv) Ermittlung von Banden im Chromatogramm, die eine geringe Höhe oder Fläche im Vergleich zur Bande mit der größten Höhe oder Fläche aufweisen, als Indiz für die Anwesenheit von Verunreinigungen im Analyten.

Bei den erfindungsgemäß eingesetzten Polyalkylenaminen handelt es sich um mehrwertige Amine oder um die entsprechenden teilweise oder vollständig an den Aminogruppen funktionalisierten, insbesondere alkylierten Derivate. Dabei bilden Aminogruppen vorzugsweise die Endgruppen der Polymerketten. Polyalkylenamine können aber auch andere Endgruppen aufweisen, beispielsweise Hydoxygruppen, Alkylgruppen oder aromatische Gruppen. Polyalkylenamine können unterschiedliche Endgruppen aufweisen.

Beispiele für erfindungsgemäß eingesetzte Polyalkylenamine sind Polyethylenamine, Polypropylenamine oder Polybutylenamine. Beispiele hierfür sind Polyamine mit den wiederkehrenden Struktureinheiten der Formel -CₙH₂ₙ-NR¹-, worin n eine ganze Zahl von 2 bis 4 ist und R¹ Wasserstoff oder C₁-C₆-Alkyl, insbesondere Wasserstoff oder Methyl, ist. Die Endgruppen dieser Polyalkylenamine sind vorzugsweise Reste der Formel -NR²R³, worin R² und R³ unabhängig voneinander Wasserstoff oder C₁-C₆-Alkyl, insbesondere Wasserstoff oder Methyl, bedeuten.

Bevorzugt werden Poly(2-oxazoline) eingesetzt. Diese enthalten insbesondere an 2-Position einen Substituenten, beispielsweise Methyl oder Ethyl.

Die erfindungsgemäß eingesetzten Poly(oxazolin)e enthalten in der Regel mindestens 80 Gew.-%, insbesondere mindestens 90 Gew. %, bezogen auf deren Gesamtmasse, an wiederkehrenden Struktureinheiten der Formel I und/oder der Formel II

-NR⁴-CR⁵H-CR⁶H- (I),

-NR⁴-CR⁵H-CR⁶H-CR⁷H- (II),

, worin
R⁴ einen Rest der Formel -CO-R⁸ bedeutet,
R⁵, R⁶ und R⁷ unabhängig voneinander Wasserstoff, Methyl, Ethyl, Propyl oder Butyl bedeuten,
R⁸ ausgewählt wird aus der Gruppe bestehend aus Wasserstoff, Methyl, Ethyl, -CₘH₂ₘ-X oder -(CₙH₂ₙ-O)ₒ-(CₚH₂ₚ-O)_{q}-R⁹,
R⁹ Wasserstoff oder C₁-C₆-Alkyl, insbesondere Methyl oder ganz besonders bevorzugt Wasserstoff ist,
m eine ganze Zahl von 1 bis 6 ist,
X ausgewählt wird aus der Gruppe bestehend aus Hydroxyl, Alkoxy, Amino, N-Alkylamino, N,N-Dialkylamino, Carboxyl, Carbonsäureester, Sulfonyl, Sulfonsäureester oder Carbamat,
n und p unabhängig voneinander ganze Zahlen von 2 bis 4 sind, wobei n ungleich p ist, n vorzugsweise 2 ist und p vorzugsweise 3 bedeutet, und
o und q unabhängig ganze Zahlen von 0 bis 60, insbesondere 1 bis 20 und ganz besonders bevorzugt 2 bis 10 sind, wobei mindestens eines der o oder q ungleich 0 ist.

Bevorzugte erfindungsgemäß eingesetzte Poly(oxazolin)e sind solche, in denen R⁸ Wasserstoff, Methyl oder Ethyl ist und R⁵ bis R⁷ Wasserstoff bedeuten oder in denen R⁸ Wasserstoff, Methyl oder Ethyl ist und zwei der Reste R⁵ bis R⁷ Wasserstoff sind ist und einer der Reste R⁵ bis R⁷ Methyl oder Ethyl ist.

Die Molmassen der erfindungsgemäß eingesetzten Poly(oxazolin)e betragen in der Regel 5000 bis 500000 g/mol, insbesondere 5000 bis 20000 g/mol. Die Molmasse wird für die Zwecke der vorliegenden Beschreibung durch Größenausschlußchromatographie bestimmt.

Bevorzugt werden Verfahren, bei denen das Polyalkylenamin ein aliphatisches Polyoxazolin ist, das Aminoendgruppen aufweist, die teilweise oder vollständig alkyliert sein können.

Bei den zu analysierenden bzw. von den Polyalkylenaminen abzutrennenden Verunreinigungen kann es sich ebenfalls ganz allgemein um organische Verbindungen handeln, wie z.B. um protische organische Verbindungen, deren protische Gruppen ganz oder teilweise funktionalisiert sein können. Typische Verunreinigungen sind Polyamine, wie einwertige Amine oder Diamine, deren Aminogruppen teilweise oder vollständig funktionalisiert sein können, beispielsweise als Alkylaminogruppen, insbesondere als N-Alkylaminogruppen oder als N,N-Dialkylaminogruppen vorliegen.

Polyoxazoline können mit einer Gradientenmethode mittels Flüssigchromatographie gekoppelt mit Elektrosprayionisation in einzelne Komponenten separiert werden.

Die Menge der Verunreinigungen in der Ausgangsprobe beträgt in der Regel kleiner gleich 20 Gew. %, vorzugsweise weniger als 5 Gew. % und insbesondere weniger als 1 Gew. %, bezogen auf die Gesamtmenge der Ausgangsprobe.

Bevorzugt werden Verfahren, bei denen es sich bei den Verunreinigungen in den Polyalkylenaminen um Polyamine handelt, deren mittlere Molmasse im selben Bereich oder unterhalb der mittleren Molmasse der zu analysierenden Polyalkylenamine liegt, vorzugsweise um Alkylendiamine und/oder um Di- oder Trialkylenamindiamine.

Im Detail ist das erfindungsgemäße Verfahren durch die Etablierung von chromatographischen Bedingungen gekennzeichnet, die den Beginn des Adsorptionsregimes bedingen. Unter diesen Bedingungen setzt ein endgruppenspezifisches Adsorptionsverhalten ein. Bei der Chromatographie von Polymeren unterscheidet man drei modi operandi, die Größenausschlußchromatographe, die Elution unabhägig von der Kettenlänge und die Verteilungs- bzw. Adsorptionschromatographie, bei der eine Wechselwirkung des Eluenten mit der stationären Phase stattfindet. Das erfindungsgemäße Verfahren ist durch das Vorliegen von Bedingungen gekennzeichnet, bei denen eine Adsorptionschromatographie vorliegt.

Mit der vorliegenden Erfindung wird das inhärente Problem eines definierten Lösungsansatzes für die Problematik der Analyse von protischen und/oder Hydroxylgruppen enthaltenden Verunreinigungen behoben. Das erfindungsgemäße Verfahren bietet somit die Möglichkeit einer qualitativen und auch einer quantitative Bestimmung von Verunreinigungen in einem definierten Molmassenbereich vornehmen zu können. Insbesondere besteht die Möglichkeit, ohne chemische Modifikationen des Produktes auszukommen und eine Analyse innerhalb weniger Minuten vornehmen zu können.

Darüber hinaus ergeben sich Vorteile des erfindungsgemäßen Verfahrens aus der offensichtlichen Einfachheit der Bestimmung und aus dem rasch vorliegenden Ergebnis, das z.B. in wenigen Minuten erhalten werden kann.

Darüber hinaus können quantitative und reproduzierbare Reinheitsanalysen von Ansatz zu Ansatz innerhalb weniger Minuten durch schnelle Flüssigchromatographie vorgenommen werden.

Als stationäre Phase wird bei dem erfindungsgemäßen Verfahren ein monolithisches Kieselgel verwendet. Solche Produkte sind bekannt und werden bereits in anderen chromatographischen Verfahren eingesetzt.

Die erfindungsgemäß eingesetzten hochporösen Kieselsäure-basierten monolithischen Materialien sind durch eine makroporöse und miteinander verbundene Durchfluß-Porenstruktur gekennzeichnet, die von einem kontinuierlichen und dauerhaften Mesoporen-Skelett eingeschlossen ist. Solche stationären Phasen erweisen sich als hoch effizient und zeigen bei der Trennung von kleinen Analyten eine retentionsstabile Leistung.

Bevorzugt eingesetzte monolithische Kieselgele sind gekennzeichnet durch das Vorliegen eines kommunizierenden Netzwerkes von Poren, d.h. durch die konvektive und/oder diffusive Zugänglichkeit des Eluenten zu diesen Poren. Bevorzugte Größen der für den Eluenten konvektiv zugänglichen Poren bewegen sich im Bereich von 0,2 bis 3 µm. Daneben können die monolithischen Kieselgele noch Poren aufweisen, welche für den Eluenten durch Diffusion zugänglich sind. Die Größen dieser Poren bewegen sich vorzugsweise im Bereich von 3 bis 200 nm.

Bevorzugte monolithische Kieselgele sind an der Oberfläche einschließlich der inneren Oberfläche mit funktionellen Gruppen modifiziert. Dabei kann es sich um hydrophile Gruppen oder um hydrophobe Gruppen handeln. Beispiele für hydrophile Gruppen sind Hydroxylgruppen. Beispiele für hydrophobe Gruppen sind Alkylgruppen, beispielsweise Alkylgruppen mit 4-, 8-, 12- oder 18-Kohlenstoffatomen.

Alternativ kann das monolithische Kieselgel in unmodifizierter Form, d.h. als polares Material, eingesetzt werden.

Das monolithische Kieselgel kann also als polares Material oder aber auch in hydrophobisierter Form, d.h. als unpolares Material, eingesetzt werden.

Bevorzugt werden mit langen Alkylgruppen, z.B. mit C₁₈-Alkyl derivatisierte monolithische Kieselgelstäbe eingesetzt.

Im erfindungsgemäßen Verfahren wird ein Elutionsmittel mit einer solchen Polarität eingesetzt, dass der Analyt während der Chromatographie in adsorptivem Gleichgewicht mit der stationären Phase steht. Die Einstellung der Elutionsstärke kann beispielsweise durch Mischung von Lösungsmitteln unterschiedlicher Polarität erfolgen. Dabei wird eine solche Elutionsstärke eingestellt, bei der die Chromatographie als Adsorptions-/Verteilungschromatographie abläuft. Die Einstellung kann vom Fachmann durch Verdünnungsreihen mittels einfacher Reihenversuche vorgenommen werden.

Beim Einsatz von polarem monolithischen Kieselgel kommen Elutionsmittel mit geringer Polarität in Betracht. Beispiele dafür sind unpolare Lösungsmittel, die vorzugsweise wasserfrei sind. Als Elutionsmittel bevorzugt sind bei 25°C flüssige aliphatische oder aromatische Kohlenwasserstoffe, wie Hexan, Heptan, Octan, Decan, Benzol, Toluol oder Xylol, sowie bei 25°C flüssige halogenierte aliphatische Kohlenwasserstoffe, wie Dichlormethan, Chloroform oder Tetrachlormethan, oder bei 25 °C flüssige Carbonsäureester, wie Essigsäuremethylester oder Essigsäureethylester, oder bei 25 °C flüssige Ether, wie Diethylether, oder Kohlenstoffdisulfid. Diese Elutionsmittel können auch als Gemische eingesetzt werden, um die erforderliche Elutionsstärke einzustellen.

Unpolare Lösungsmittel können mit geringen Mengen an Wasser, Alkoholen oder aprotisch polaren Lösungsmitteln gemischt werden, um eine bestimmte Polarität des Elutionsmittels einzustellen.

Beim Einsatz von unpolarem monolithischen Kieselgel (entsprechend einer als Umkehrphase ausgebildeten stationären Phase) kommen Elutionsmittel mit hoher Polarität in Betracht.

Beispiele für polare Elutionsmittel sind Wasser, wasserlösliche Alkohole oder aprotische polare Lösungsmittel.

Beispiele für wasserlösliche Alkohole sind aliphatische Alkohole mit ein bis vier Kohlenstoffatomen.

Beispiele für aprotische polare Lösungsmittel sind Ketone, wie Aceton, Lactone, wie gamma-Butyrolacton, Lactame, wie N-Methyl-2-pyrrolidon, Nitrile, wie Acetonitril, Nitroverbindungen, wie Nitromethan, tertiäre Carbonsäureamide, wie Dimethylformamid oder Dimethylacetamid, Harnstoffderivate, wie Tetramethylharnstoff oder Dimethylpropylenharnstoff (DMPU), Sulfoxide, wie Dimethylsulfoxid (DMSO), Sulfone, wie Sulfolan, Kohlensäureester, wie Dimethylcarbonat oder Ethylencarbonat.

Besonders bevorzugt werden Mischungen von Wasser mit aprotischen polaren Lösungsmitteln eingesetzt. Beispiele für diese Gemische sind Gemische von Methanol und Wasser, von Ethanol und Wasser oder von Aceton und Wasser, oder insbesondere Mischungen von Wasser mit Acetonitril.

Die erforderliche Polarität des Elutionsmittels entsprechend einem Volumenverhältnis von Wasser zu aprotischem polaren Lösungsmittel, wie Wasser zu Acetonitril, von 6 : 4 ist ein ausgezeichneter Ausgangswert. Die Feineinstellung der Trennparameter erfolgt durch die oben angesprochenen Reihenversuche in infinitesimalen Schritten. Für das System Wasser/Acetonitril wird vorzugsweise das Volumenverhältnis von 6,5 : 3,5 bis 5,5 : 4,5 angestrebt.

Bevorzugt wird ein Verfahren, bei dem das monolithische Kieselgel als Umkehrphase ausgebildet ist und bei dem das Elutionsmittel Wasser und ein organisches Lösungsmittel in einer solchen Menge enthält, dass die Elution des Analyten als Adsorptions-/Verteilungschromatographie erfolgt.

Das erfindungsgemäße Verfahren kann bei Normaldruck oder vorzugsweise bei Überdruck durchgeführt werden. Vorzugsweise beträgt der Druck in der Chromatographiesäule 10 bis 200 bar.

Das erfindungsgemäße Verfahren wird bei solchen Temperaturen durchgeführt, bei denen das Elutionsmittel in der Säule flüssig ist. Vorzugsweise beträgt die Temperatur in der Chromatographiesäule 4 bis 50 °C.

Säulenlängen und Säulendurchmesser können in weiten Bereichen gewählt werden. Typische Säulenlängen bewegen sich im Bereich von 1 cm bis 1 m. Typische Säulendurchmesser bewegen sich im Bereich von 10 µm bis 10 cm.

Die Detektion der Komponenten des Analyten am austrittsseitigen Ende der Chromatographiesäule kann durch sämtliche dem Fachmann bekannte Methoden erfolgen. Beispiele dafür sind die Detektion von physikalischen Eigenschaften der mobilen Phase, wie der Lichtabsorption, der Fluoreszenz, der Lichtstreuung oder der Wärmeleitfähigkeit, oder die Detektion von chemischen Eigenschaften der mobilen Phase, wie dem Einsatz von Indikatorsubstanzen.

Bevorzugt werden Verfahren, bei denen die Detektion der Komponenten des Analyten am austrittsseitigen Ende der Chromatographiesäule durch Lichtstreudetektion (ELSD) oder durch UV/VIS-Spektroskopie erfolgt.

Das Resultat der Detektion der Komponenten des Analyten am austrittsseitigen Ende der Chromatographiesäule ist ein Chromatogramm, in dem Spezies der Probe mit verschiedenen Elutionszeiten in Abhängigkeit von der Zeit aufgetragen sind.

Aus der Höhe oder der Fläche der Banden des Chromatogramms lässt sich die qualitative Menge der betreffenden Komponente bestimmen. Durch den Einsatz entsprechender Kalibrierstandards lassen sich auch quantitative Bestimmungen durchführen.

Die Verunreinigungen in der Probe sind nur zu einem geringen Gehalt darin enthalten im Vergleich zu den Polymeren, welche den Hauptteil der Probe ausmachen.

Beim Auftreten von Banden im Chromatogramm, die eine geringe Höhe oder Fläche im Vergleich zur Bande mit der größten Höhe oder Fläche aufweisen kann gefolgert werden, dass Verunreinigungen in der Probe anwesend sind.

Bevorzugt ist ein Verfahren bei dem die Höhe der Banden mit geringer Höhe weniger als 10 %, insbesondere weniger als 5 % der Höhe der Bande mit der größten Höhe beträgt.

Das erfindungsgemäße Verfahren kann ansatzweise oder kontinuierlich durchgeführt werden. Dazu können Standardappaturen der Chromatographie eingesetzt werden, beispielsweise herkömmliche HPLC Anlagen, die mit dem speziellen Säulenmaterial ausgerüstet sind.

Das erfindungsgemäße Verfahren eignet sich zur schnellen Prüfung von Polyalkylenaminen auf Verunreinigungen. Es kann also vorteilhaft zur Qualitätskontrolle solcher Produkte eingesetzt werden.

Das erfindungsgemäße Verfahren läßt sich auch zur Abtrennung von Verunreinigungen aus Polyalkylenaminen einsetzen. Es kann also auch vorteilhaft in der präparativen Aufreinigung dieser Verbindungen eingesetzt werden.

Diese Verwendungen sind ebenfalls Gegenstand der vorliegenden Erfindung.

Das nachfolgende Beispiel erläutert die Erfindung ohne diese zu begrenzen.

### Beispiel

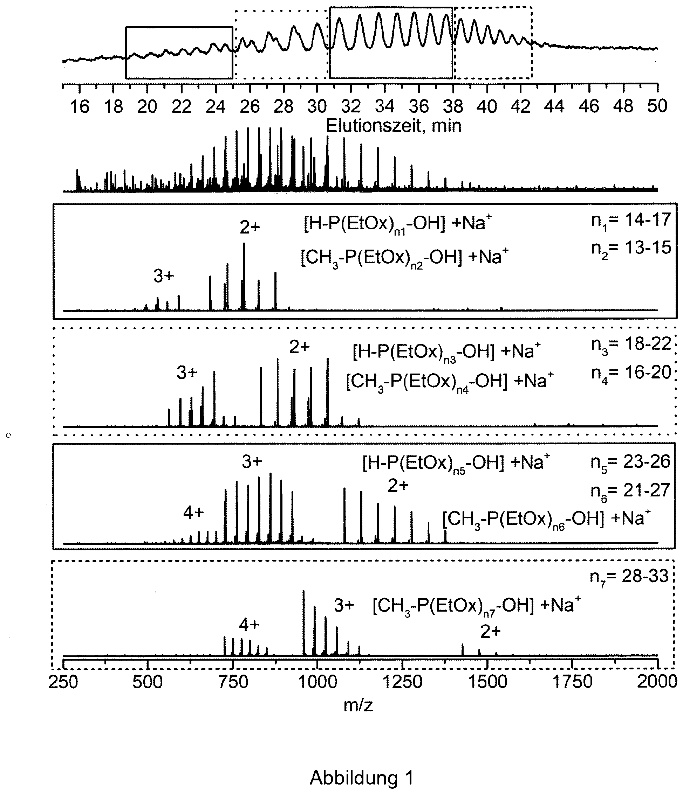

Mit Hilfe der Gradienten-Flüssigchromatographie gekoppelt mit Elektrosprayionisation (ESI) wurden Polyoxazoline untersucht (Abbildung 1). In der Abbildung 1 sind die einzelnen Oligomere im Chromatogramm von Polyoxazolin dargestellt, welches endständig eine OH- und eine CH₃-Gruppe aufweist. Unter dem Chromatogramm ist das ESI Spektrum der zu untersuchenden Substanz dargestellt. Eingerahmt sind die massenspektroskopisch untersuchten einzelnen Oligomere. Diese eluieren zu unterschiedlichen Zeiten, was im Chromatogramm durch die jeweiligen Rahmen dargestellt ist. Massenspektroskopisch konnten CH₃- und H-initiierte Polyoxazoline nachgewiesen werden und mit Hilfe einer Gradientenmethode chromatographisch separiert werden. Die Messung erfolgte bei einem Fluss von 0,5 mL/min mit wässrigem Acetontril als Elutionsmittel. Dabei wurde der Acetonitrilgehalt innerhalb von 70 min von 20 % auf 40% erhöht. Nach weiteren10 min wurde der Acetonitrilgehalt auf 80 % erhöht. Dabei wurde eine Chromatographiesäule eingesetzt, die monolithisches Kieselgel als stationäre Phase enthielt.

## Patentansprüche

1. Verfahren zur Bestimmung von Verunreinigungen in Polyalkylenaminen umfassend die Schritte
i) Einbringen von Polyalkylenaminen als Analyt in eine Chromatographiesäule, die monolithisches Kieselgel als stationäre Phase enthält,
ii) Eluieren des Analyten mit einem flüssigen Elutionsmittel, das eine solche Polarität aufweist, dass der Analyt während der Chromatographie in adsorptivem Gleichgewicht mit der stationären Phase steht,
iii) Detektion der Komponenten des Analyten am austrittsseitigen Ende der Chromatographiesäule unter Erhalt eines Chromatogramms, welches unterschiedliche Komponenten des Analyten und deren qualitative Menge in Abhängigkeit von der Elutionszeit der einzelnen Komponenten ausweist, und
iv) Ermittlung von Banden im Chromatogramm, die eine geringe Höhe oder Fläche im Vergleich zur Bande mit der größten Höhe oder Fläche aufweisen, als Indiz für die Anwesenheit von Verunreinigungen im Analyten.

2. Verfahren nach Anspruch 1, **dadurch gekennzeichnet, dass** das Polyalkylenamin ein aliphatisches Polyoxazolin ist, das Amino-, Hydroxy-, Alkyl- und/oder Arylendgruppen aufweist, wobei die Aminoendgruppen teilweise oder vollständig alkyliert sein können.

3. Verfahren nach mindestens einem der Ansprüche 1 oder 2, **dadurch gekennzeichnet, dass** es sich bei den Verunreinigungen in den Polyalkylenaminen um Polyamine handelt, deren mittlere Molmasse im selben Bereich oder unterhalb der mittleren Molmasse der zu analysierenden Polyalkylenamine liegt, vorzugsweise um Alkylendiamine und/oder um Di- oder Trialkylenimindiamine.

4. Verfahren nach mindestens einem der Ansprüche 1 bis 3, **dadurch gekennzeichnet, dass** das monolithische Kieselgel als Umkehrphase ausgebildet ist und dass das Elutionsmittel Wasser und ein organisches Lösungsmittel in einer solchen Menge enthält, dass die Elution des Analyten als Adsorptionschromatographie stattfindet.

5. Verfahren nach Anspruch 4, **dadurch gekennzeichnet, dass** das Elutionsmittel Wasser und Acetonitril enthält.

6. Verfahren nach mindestens einem der Ansprüche 1 bis 5, **dadurch gekennzeichnet, dass** es sich bei dem chromatographischen Verfahren um eine Hochdruck-Flüssigkeitschromatographie handelt.

7. Verfahren nach mindestens einem der Ansprüche 1 bis 6, **dadurch gekennzeichnet, dass** die Detektion der Komponenten des Analyten am austrittsseitigen Ende der Chromatographiesäule durch Lichtstreudetektion (ELSD) oder durch UV/VIS-Spektroskopie erfolgt.

8. Verfahren nach mindestens einem der Ansprüche 1 bis 7, **dadurch gekennzeichnet, dass** die Höhe der Banden mit geringer Höhe weniger als 10 %, insbesondere weniger als 5 % der Höhe der Bande mit der größten Höhe beträgt.

9. Verwendung des Verfahrens nach mindestens einem der Ansprüche 1 bis 8 zur Qualitätskontrolle von Polyalkylenaminen oder zur präparativen Aufreinigung von Polyalkylenaminen.
